# EUROPÄISCHE PATENTSCHRIFT

(11) **EP 3 347 848 B1**
(45) Veröffentlichungstag und Bekanntmachung des Hinweises auf die Patenterteilung: **26.08.2020**
(21) Anmeldenummer: 16782036.4
(22) Anmeldetag: 12.10.2016
(51) Int. Cl.: G06F 21/12, G06F 21/57

(54) **SPEICHERPROGRAMMIERBARER BAUSTEIN UND VERFAHREN ZUR GESCHÜTZTEN ÜBERTRAGUNG VON DATEN AUF EINEN SPEICHERPROGRAMMIERBAREN BAUSTEIN**
STORED-PROGRAM MODULE AND METHOD FOR THE SECURED TRANSFER OF DATA TO A STORED-PROGRAM MODULE
MODULE À COMMANDE PAR PROGRAMME ENREGISTRÉ ET PROCÉDÉ DE TRANSMISSION SÉCURISÉE DE DONNÉES SUR UN MODULE À COMMANDE PAR PROGRAMME ENREGISTRÉ

(30) Priorität: 04.12.2015 DE 102015224300
(43) Veröffentlichungstag der Anmeldung: 18.07.2018
(73) Patentinhaber: Siemens Mobility GmbH, 81739 München (DE)
(72) Erfinder: MERLI, Dominik, 86690 Mertingen (DE); SCHNEIDER, Daniel, 80796 München (DE)
(86) Internationale Anmeldenummer: PCT/EP2016/074391
(87) Internationale Veröffentlichungsnummer: WO 2017/092917

(56) Entgegenhaltungen:
- DE-A1-102013 213 314
- US-A1- 2015 113 258

## Beschreibung

Die Erfindung betrifft einen speicherprogrammbierbaren Baustein mit ladbarem Vertrauensanker sowie ein Verfahren zur geschützten Übertragung von Daten von einer externen Datenquelle auf mindestens eine Komponente eines speicherprogrammierbaren Bausteins.

Eingebettete Systeme werden Computer oder Rechner bezeichnet, die in einem technischen Kontext eingebunden sind und beispielsweise Überwachungs- oder Steuerungsfunktionen in einem Gerät ausführen. Eingebettete Systeme vereinen typischerweise Mikroprozessoren, speicherprogrammierbare Bausteine, auch FPGA bezeichnet, RAM-Speicher, Flash-Speicher und diverse Peripherie in einer Plattform. Der Schutz dieser Systeme spielt eine zunehmend wichtige Rolle, um einen ordnungsgemäßen Betrieb gewährleisten zu können. Eine der wichtigsten Anforderungen dafür ist die Integrität des eingebetteten Systems, d. h. der Schutz gegen nicht-autorisierte Manipulation.

Um die Integrität eines solchen eingebetteten Systems zu erreichen ist ein sicheres Laden des Systems, das auch als "Secure Boot" oder "Trusted Boot" oder "Verified Boot" bekannt ist. Dabei wird der Ladeprozess von einem nicht änderbaren Vertrauensanker, auch Root-of-Trust genannt, angestoßen. Dieser Vertrauensanker ist beispielsweise ein Stück Hardware, das jeweils die Integrität der als nächstes zu ladenden Stufe der Boot-Software durch die Prüfung eines Hashwertes, beispielsweise eines kryptographischen Hashwertes, einem Message Authentication Code oder einer digitalen Signatur über den Inhalt des zu ladenden Codes und der benötigten Daten, überprüft. Nur bei einer erfolgreichen Überprüfung wird die nächste Stufe gestartet. Diese überprüft wiederum die nächste Stufe, so dass eine Vertrauenskette, eine sogenannte "Chainof-Trust" gewährleistet ist.

Ein solcher Secure-Boot-Mechanismus, der die Integrität von Software schützt, die auf einer Soft-CPU in einem FPGA ausgeführt werden soll, ist beispielsweise in einem Artikel mit dem Titel "Introducing the new libero SoC v11.6 Software Toolset", das im Internet unter der URL http://www.microsemi.com/products/fpga-soc/security/secure-boot veröffentlicht ist, beschrieben. Dieser Mechanismus ist direkt nutzbar und führt zu einem guten Schutzniveau.

Essentieller Punkt dieser Lösung ist, dass der initiale Boot-Code und eventuell benötigte kryptographische Schlüssel manipulationsgeschützt implementiert sein müssen. Dies ist bisher nur möglich, wenn der ausführende Mikroprozessor bzw. ein speicherprogrammierbarer Baustein, auf dem der ausführende Mikroprozessor ausgebildet ist, vom Hersteller bereits mit einem in Hardware integrierten Vertrauensanker ausgestattet wurde, z. B. einem nur lesbaren Speicher für Ladecode, auch Boot ROM bezeichnet. Dies ist jedoch oft nicht der Fall oder erfordert den Kauf einer teuren Variante.

Aus der DE 10 2013 213 314 A1 ist ferner ein Verfahren zum Hinterlegen mindestens eines berechenbaren Integritätsmesswertes in einem ersten Speicherbereich eines Speichers einer Komponente bekannt, wobei der mindestens eine berechenbare Integritätsmesswert als Prüfwert eines Softwaremoduls der Komponente ermittelt wird. Dadurch wird eine Speichervorrichtung geschaffen, welche die praktische Anwendung der so genannten TPM-Technologie (Trusted Platform Module-Technologie) erheblich vereinfacht, so dass ein Leightweight-TPM bereitgestellt werden kann.

Die US 2015/0113258 A1 offenbart des Weiteren einen vertrauenswürdigen Prozessor, welcher mithilfe eines in diesem integrierten sicheren Pre-Bootloaders gestartet wird und überprüft, ob ein externer Bootloader gültig ist, wobei der Prozessor im Falle der Gültigkeit mit diesem Bootloader gestartet wird. Im Rahmen des Pre-Bootloaders kommt dabei ein so genanntes Pre-Boot ROM zum Einsatz, welches beispielsweise zur Speicherung von Authentifizierungsinformationen und kryptografischen Schlüsseln vorgesehen ist.

Die Aufgabe der vorliegenden Erfindung ist es daher, einen einfachen und günstigen Vertrauensanker in einem eingebetteten System, insbesondere im Zusammenspiel mit einer Soft-CPU, in einem speicherprogrammierbaren Baustein zu schaffen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Der erfindungsgemäße speicherprogrammierbare Baustein umfasst eine Prüfeinrichtung und mindestens eine weitere Komponente, wobei die Prüfeinrichtung durch einen Ladebitstrom auf dem Baustein erzeugbar ist und die Prüfeinrichtung derart ausgebildet ist, mindestens einen Datenbitstrom zum Ausführen auf der mindestens einen Komponente des Bausteins von einer externen Datenquelle einzulesen, den Datenbitstrom zu prüfen und bei positivem Prüfergebnis ein Steuersignal auszugeben, das die Komponente mit den Daten des Datenbitstroms aktiviert.

Die Prüfeinrichtung stellt somit einen Vertrauensanker dar, der mit dem Ladebitstrom auf einen speicherprogrammierbaren Baustein geladen wird. Die mindestens eine Komponente ist beispielsweise eine Soft-CPU, d.h. ein Mikroprozessor, der in das FPGA-Design eingebunden ist. Die Komponente ist dabei nach dem Laden der Prüfeinrichtung deaktiviert und wird erst nach einer positiven Prüfung des Datenbitstroms durch die Prüfeinheit aktiviert. Dadurch wird ein Integritätsschutz für Software, beispielsweise für einen Boot Loader oder ein Betriebssystem, die auf einer externen Datenquelle gespeichert sind, erreicht. Dieser Integritätsschutz kann nur durch ein sehr aufwendiges Reverse Engineering des FPGA Ladebitstroms gebrochen werden. Somit wird die Sicherheit für ein Secure Boot auf kostengünstigen speicherprogrammierbaren Bausteinen ohne dedizierte Secure Boot Unterstützung deutlich erhöht. Ein weiterer Vorteil besteht darin, dass das gesamte eingebettete System nur minimal angepasst werden muss, keine zusätzlichen Hardwarebauteile nötig sind und die Prüfeinrichtung als Modul auf dem FPGA sehr ressourcensparend implementiert werden kann.

In einer vorteilhaften Weiterbildung umfasst die Prüfeinrichtung eine kryptographische Funktion und ist derart ausgebildet, die Daten des Datenstroms mit Hilfe eines Validierungsparameters und der kryptographischen Funktion zu prüfen.

Somit kann der für die Komponente vorgesehene Datenbitstrom vor einem Aktivieren auf der Komponente flexibel in der Prüfeinrichtung auf Übereinstimmung mit dem erwarteten Datenbitstrom getestet werden.

In einer vorteilhaften Ausführungsform ist die kryptographische Funktion eine Hashfunktion und der Validierungsparameter ein mit der Hashfunktion erstellter Hashwert des Datenbitstroms.

Eine Hashfunktion ist dabei eine wenig komplexe Funktion, die einfach und Ressourcen-sparend implementiert werden kann.

In einer alternativen Ausführungsform ist die kryptographische Funktion eine kryptographische Hashfunktion und der Validierungsparameter ein geheimer Schlüssel.

Dabei wird beispielsweise ein kryptographischer Nachrichten-Authentisierungscode HMAC oder ein anderer kryptographischer Parameter durch die kryptographische Hashfunktion unter Verwendung des geheimen Schlüssels über den Datenbitstrom erzeugt und gegen einen in der Datenquelle gespeicherten und/oder im Datenbitstrom enthaltene originalen HMAC verglichen. Dies hat den Vorteil, dass kein spezifischer Hashwert auf dem speicherprogrammierbaren Baustein oder direkt auf der Prüfeinrichtung implementiert ist und insbesondere dieser spezifische Hashwert nicht in einem Ladebitstrom auf den Baustein übertragen werden muss. Es können somit unterschiedliche Datenbitströme mit nur einem Validierungsparameter geprüft werden.

In einer vorteilhaften Ausführungsform ist die kryptographische Funktion eine Signatur-Validierungsfunktion und der Validierungsparameter ein öffentlicher Schlüssel.

Dies hat den Vorteil, dass kein geheimer Schlüssel im Ladebitstrom auf den Baustein bzw. die Prüfeinrichtung übertragen werden muss und daher auch nicht ausgelesen und manipuliert werden kann.

In einer vorteilhaften Ausführungsform ist der Validierungsparameter mit dem Ladebitstrom auf dem Baustein implementierbar.

Dies ermöglicht es, flexibel bei der Synthese des speicherprogrammierbaren Bausteins den Validierungsparameter einzubringen. D.h., bereits bei der Konfiguration des Bausteins wird über den Ladebitstrom der Validierungsparameter für die nachfolgend auf der Komponente zu ladende Software erstellt. Durch eine automatische Deaktivierung der Komponente nach der initialen Konfiguration und einer expliziten Aktivierung der Komponente nach erfolgreicher Prüfung ist somit ein ungeprüftes Laden bzw. Booten der Komponente kaum möglich.

In einer vorteilhaften Ausführungsform umfasst der speicherprogrammierbare Baustein eine zusätzliche Sicherheitseinheit, die mit der zu programmierenden Komponente und der Prüfeinrichtung verbunden ist und durch das Steuersignal der Prüfeinrichtung aktivierbar ist.

Somit können manipulierte Daten wie bspw. bösartige Software erkannt werden und eine Manipulation des Vertrauensankers verhindert werden.

In einer vorteilhaften Ausführungsform ist die Prüfeinrichtung derart ausgebildet, bei einem negativen Prüfergebnis ein Steuersignal zum Deaktivieren der Komponente oder zum Deaktivieren mindestens einer Teilfunktion der Komponente zu erzeugen oder die Komponente mit einem zweiten Datenbitstrom zu aktivieren, der eine Benutzung der Komponente unmöglich oder nur eingeschränkt möglich macht.

Somit ist ein aktives Deaktivieren einer bereits aktiven Komponente möglich.

In einer weiteren vorteilhaften Ausführungsform umfasst der speicherprogrammierbare Baustein einen steuerbaren Schalter, der durch das Steuersignal der Prüfeinrichtung die Komponente oder den Vertrauensanker mit einem Taktgeber verbindet und so die Komponente oder den Vertrauensanker aktiviert oder trennt und somit deaktiviert.

Ein steuerbarer Schalter ist einfach konfigurierbar und stellt eine einfache Möglichkeit zur Aktivierung bzw. Deaktivierung der Komponente dar.

Das erfindungsgemäße Verfahren zur geschützten Übertragung von Daten von einer externen Datenquelle auf mindestens eine Komponente eines speicherprogrammierbaren Bausteins umfasst die Schritte, Erzeugen einer Prüfeinrichtung auf dem Baustein durch einen Ladebitstrom, Einlesen mindestens eines Datenbitstroms zum Ausführen auf der mindestens einen Komponente des Bausteins von einer externen Datenquelle in die Prüfeinrichtung, Prüfen des Datenbitstroms in der Prüfeinrichtung und Ausgabe eines Steuersignals bei positivem Prüfergebnis zum Aktivieren der Komponente mit den Daten des Datenbitstroms.

Ist die Komponente beispielsweise eine Soft-CPU auf einem FPGA, so kann durch das Verfahren der Vertrauensanker in den Ladebitstrom des FPGAs verlagert werden. Dadurch ist ein Integritätsschutz für die in der Datenquelle enthaltene Software, wie Boot Loader oder auch Konfiguration eines FPGA Moduls möglich, der nur durch aufwendige Maßnahmen gebrochen werden kann.

In einer vorteilhaften Ausführungsform werden die Daten des Datenbitstroms mit Hilfe einer kryptographischen Funktion und einem Validierungsparameter in der Prüfungseinheit geprüft.

Es stehen somit verschiedene auch bekannte Verfahren zur Auswahl, die entsprechend dem Schutzbedarf der zu ladenden Daten oder auch abhängig von der Leistungsfähigkeit des programmierbaren Bausteins ausgewählt werden können.

In einer vorteilhaften Ausführungsform wird der Validierungsparameter über den Ladebitstrom auf dem Baustein implementiert.

Dies ermöglicht es, individuell bei jedem Aktivieren des speicherprogrammierbaren Bausteins, unterschiedliche Daten, z.B. unterschiedliche Ausprägungen eines Bootloaders oder Betriebssystems, auf eine Komponente zu laden und diese Daten vorher individuell zu prüfen.

In einer vorteilhaften Ausführungsform wird in der Prüfeinrichtung aus den Daten des Datenbitstroms mittels einer Hashfunktion als kryptographischer Funktion ein Prüfwert erzeugt und gegenüber dem Validierungsparameter geprüft.

In einer weiteren vorteilhaften Ausführungsform wird als kryptographische Funktion eine kryptographische Hashfunktion und als Validierungsparameter ein geheimer Schlüssel verwendet und im Datenbitstrom ein mit demselben geheimen Schlüssel erzeugter Vergleichswert an die Prüfeinrichtung übertragen.

Dies hat den Vorteil, dass unterschiedliche Daten eines Datenbitstroms übertragen und geprüft werden können, ohne den Validierungsparameter, hier insbesondere den geheimen Schlüssel, anpassen zu müssen. Es ist somit kein neuer Ladestrom zur Konfiguration eines geänderten Validierungsparameters notwendig.

In einer vorteilhaften Ausführungsform ist die kryptographische Funktion eine Schlüsselvalidierungsfunktion und der Validierungsparameter ein öffentlicher Schlüssel. Der Datenbitstrom wird signiert mit einem dem öffentlichen Schlüssel entsprechenden geheimen Schlüssel an die Prüfeinheit übertragen.

Eine Schlüsselvalidierungsfunktion für ein asymmetrisches Verschlüsselungsverfahren, beispielsweise einer Private-Key-Infrastruktur, bietet einen besonders hohen Integritätsschutz und hat wie das zuvor beschriebene symmetrische Verfahren mit geheimem Schlüssel den Vorteil, den Validierungsparameter bei geändertem Datenbitstrom nicht nochmals in den Baustein einbringen zu müssen. Des Weiteren muss bei dem genannten asymmetrischen Verfahren lediglich der öffentliche Schlüssel jedoch kein geheimer Schlüssel über den Ladebitstrom in den Baustein eingebracht werden.

In einer vorteilhaften Ausführungsform enthält der Datenbitstrom Daten eines Startprogramms, auch Boot Loader genannt, eines Betriebssystems oder einer Bausteinkonfiguration und die externe Datenquelle ist insbesondere eine Speichereinheit außerhalb des speicherprogrammierbaren Bausteins oder ein externes Speichermedium.

Des Weiteren wird ein Computerprogrammprodukt beansprucht, das Programmcodeteile umfasst, die geeignet sind, die Schritte des beanspruchten Verfahrens durchzuführen.

Ausführungsbeispiele des erfindungsgemäßen speicherprogrammierbaren Bausteins sowie des beanspruchten Verfahrens sind in den Zeichnungen beispielhaft dargestellt und werden anhand der nachfolgenden Beschreibung näher erläutert. Es zeigen:
- Figur 1: ein erstes Ausführungsbeispiel eines erfindungsgemäßen speicherprogrammierbaren Bausteins in Blockdarstellung,
- Figur 2: ein zweites Ausführungsbeispiel eines erfindungsgemäßen speicherprogrammierbaren Bausteins mit zusätzlicher Sicherheitseinheit in Blockdarstellung, und
- Figur 3: ein Ausführungsbeispiel des erfindungsgemäßen Verfahrens als Ablaufdiagramm.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

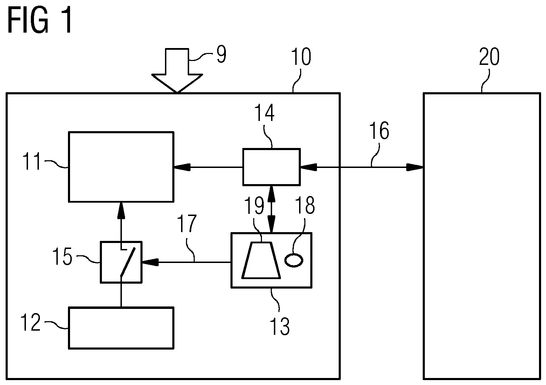

Figur 1 zeigt einen speicherprogrammierbaren Baustein, im nachfolgenden auch kurz FPGA genannt, der über einen Ladebitstrom 9 konfiguriert wird. Bei diesem auch als Synthese bezeichneten Vorgang werden durch den Ladebitstrom 9 Strukturen, auch als Module oder Komponenten bezeichnet, auf dem speicherprogrammierbaren Baustein konfiguriert, die verschiedenste Schaltungen durchführen. Diese Schaltungen reichen von einfachen Synchronzählern bis zu hoch komplexen Schaltungen, wie Mikroprozessoren. Auf dem dargestellten Baustein 10 sind ein Taktgeber 12, eine Eingabe-Schnittstelle 14, ein steuerbarer Schalter 15, sowie eine Prüfeinrichtung 13 konfiguriert. Eine Komponente 11 ist als Mikroprozessor konfiguriert. Dabei ist der Taktgeber 12 über den steuerbaren Schalter 15 mit der Komponente Verbunden. Die Eingabe-Schnittstelle 14 hat eine Verbindung zur externen Datenquelle 20 sowie zur Komponente 11. Dabei ist bevorzugt lediglich eine der beiden Verbindungen aktiv. Die Eingabe-Schnittstelle 14 ist des Weiteren mit der Prüfeinrichtung 13 verbunden.

Die Prüfeinrichtung 13 weist eine Verbindung über die Eingabe-Schnittstelle 14 zur Datenquelle 20 und eine Verbindung zum steuerbaren Schalter 15 auf. Die Prüfeinheit 13 ist des Weiteren derart konfiguriert, ein Steuersignal 17 an den steuerbaren Schalter 15 auszugeben. Die Prüfeinrichtung 13 umfasst des Weiteren eine kryptographische Funktion 19 sowie einen Validierungsparameter 18.

Im dargestellten Beispiel sei dieser Prozessor nicht als Schaltung direkt über Strukturen des Bausteins realisiert, sondern als sogenannte Soft- oder Softcore-CPU, die in das FPGA-Design eingebunden ist. Eine Soft-CPU gleicht einer externen CPU und stellt eine standardisierte Struktur bereit. Diese Komponente 11 und nachfolgend der Baustein selbst soll nun über einen sicheren Ladevorgang, auch "Secure Boot", "Trusted Boot" oder "Verified Boot" genannt, gestartet werden. Um die Integrität eines Systems zu gewährleisten, wird der Ladeprozess von einer sicheren Einheit, üblicherweise als Vertrauensanker bezeichnet, angestoßen. Dazu wird im ersten Schritt ein Boot Loader und nachfolgend ein Betriebssystem und weitere Software in den FPGA bzw. über den FPGA in weitere Bausteine eines eingebetteten Systems geladen. Daten, etwa der Boot Loader, das Betriebssystem oder auch weitere Daten sind dabei auf einer externen Datenquelle 20 gespeichert und von dort über einen Datenbitstrom 16 in den Baustein 10 geladen. Die externe Datenquelle 20 kann beispielsweise als ein Flash-Speicherbaustein oder ein reiner Lesespeicher, auch ROM genannt, der auf einem anderen Speicherchip implementiert ist oder allgemein ein externes Speichermedium, wie beispielsweise ein USB-Stick, eine SD-Karte, eine Compact Disc oder Ähnliches sein.

Nach der Konfiguration des Bausteins 10 durch den Ladebitstrom 9 wird die Prüfeinrichtung 13 automatisch aktiviert. Die Verbindung zwischen Taktgeber 12 und Komponenten 11 ist durch den steuerbaren Schalter 15 getrennt, sodass die Komponente nicht aktiv ist. Über die Eingabeschnittstelle 14 werden Daten in einem Datenbitstrom 16 an die Prüfeinrichtung 18 übermittelt. Die Prüfeinrichtung umfasst des Weiteren eine kryptographische Funktion 19 sowie einen Validierungsparameter 18, der beispielsweise ein Hashwert oder ein geheimer Schlüssel oder ein öffentlicher Schlüssel sein kann, der zusammen mit der kryptographischen Funktion zur Prüfung des zu ladenden Datenstroms 16 verwendet wird.

Der steuerbare Schalter 15, der zwischen den Taktgeber und die Komponente 11 zwischengeschaltet ist, stellt eine einfache Möglichkeit dar, die Komponente 11 dediziert zu aktivieren bzw. zu deaktivieren. Die beschriebene Erfindung kann auch mit anderen technischen Einrichtungen zur Aktivierung bzw. Deaktivierung der Komponente 11 verwendet werden. Diese sind nicht explizit beschrieben, aber einem Fachmann auf dem Gebiet von speicherprogrammierbaren Bausteinen bekannt.

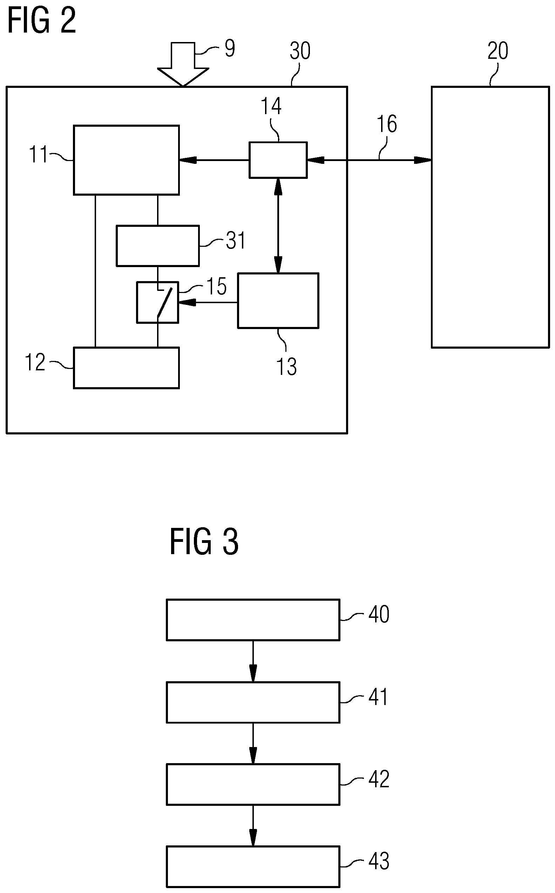

In Figur 2 ist eine weitere Ausführungsvariante 30 eines speicherprogrammierbaren Bausteins dargestellt. Neben den in Figur 1 dargestellten Strukturen 11, 12, 13, 14 ,15 , Funktion 18 und Validierungsparameter 19 ist im speicherprogrammierbaren Baustein 30 eine zusätzliche Sicherheitseinheit 31 implementiert, die einen dedizierten Vertrauensanker bildet. Diese Sicherheitseinheit 31 ist einerseits mit der Komponente 11, also beispielsweise einer Soft-CPU, und andererseits mit dem steuerbaren Schalter 15 verbunden. Der steuerbare Schalter 15 ist wiederum an den Taktgeber 12 angeschlossen und wird von der Prüfeinheit 13 gesteuert.

Anhand von Figur 3 wird nun das Verfahren zum geschützten Übertragen von Daten von einer externen Datenquelle 20 auf mindestens eine Komponente 11 eines speicherprogrammierbaren Bausteins 10 bzw. 30 beschrieben.

Bei einem ersten Verfahrensschritt 40 wird durch einen Ladebitstrom 9 eine Prüfeinrichtung 13 auf dem Baustein 10, 30 erzeugt. Dies kann beispielsweise im Rahmen eines Syntheseprozesses zusammen mit der Konfiguration der weiteren beschriebenen Module bzw. Komponenten 11, 12, 13, 14, 15, Funktion 18 und Validierungsparameter 19 erfolgen. Der programmierbare Schalter 15 ist deaktiviert, so dass die Komponente 11, beispielsweise eine Soft-CPU, nicht in Betrieb geht. In den in Figuren 1 und 2 dargestellten Bausteinen 10, 30 ist die Verbindung zwischen Taktgeber 12 und Komponente 11 getrennt. Die Eingabeschnittstelle 14 ist mit der Prüfeinheit 13 verbunden. Optional kann die Eingabeschnittstelle 15 gleichzeitig auch mit der Komponente 11 verbunden sein. Einzulesende Daten werden auf der Komponente 11 jedoch nicht verarbeitet, da die Komponente 11 nicht mit dem Taktgeber 12 verbunden ist und somit inaktiv ist.

Nachfolgend wird im Verfahrensschritt 41 mindestens ein Datenbitstrom zum Ausführen auf der zumindest einen Komponente 11 des Bausteins 10, 30 von der externen Datenquelle 20 in die Prüfeinrichtung 13 eingelesen. Es wird also beispielsweise der Boot Loader Code für eine als Soft-CPU ausgebildete Komponente aus einem zuvor definierten Speicherbereich der Datenquelle 20 geladen. In der Prüfeinrichtung 13 wird nun der Datenbitstrom 16, hier der Boot Loader Code, mit der kryptographischen Funktion 19 verarbeitet. Beispielsweise ist als kryptographische Funktion eine Hashfunktion implementiert, beispielsweise SHA256 oder SHA3, die aus dem Datenbitstrom 16 einen Hashwert ermitteln. Im Verfahrensschritt 42 wird nun dieser Hashwert mit dem Validierungsparameter 19 verglichen und somit der Datenbitstrom geprüft. Der Validierungsparameter 19 ist hier der Hashwert, der über den Datenbitstrom des zu ladenden Boot Loader Codes mit der gleichen Hashfunktion gebildet wurde und beispielsweise mit dem Ladebitstrom 9 auf dem Baustein 10, 30 konfiguriert wurde. Der Validierungsparameter 19 ist beispielsweise in der Prüfeinrichtung 13 implementiert oder die Prüfeinheit 13 kann auf einen außerhalb der Prüfeinheit 13 auf dem Baustein 10, 30 implementierten Validierungsparameter zugreifen.

Bei einem positiven Prüfergebnis wird der steuerbare Schalter 15 geschlossen, der Taktgeber 12 mit der Komponente 11 verbunden und somit die Komponente 11 gestartet. War die Eingabeschnittstelle lediglich mit der Prüfeinrichtung 13 verbunden, so nun wird die Verbindung zwischen der Eingabeschnittstelle 14 und der Komponente 11 freigegeben, so dass der Datenbitstrom nun auf die Komponente 11 geladen wird. Ein Laden des Datenbitstroms 16 ist somit erst nach einer erfolgreichen Integritätsprüfung des Datenbitstroms möglich, siehe Schritt 43. Bei einem negativen Prüfungsergebnis bleibt der steuerbare Schalter 15 offen und verhindert dadurch das Booten manipulierter Software aus der externen Datenquelle 20, beispielsweise einen Flash-Speicher.

Wird das Verfahren auf den in Figur 2 dargestellten speicherprogrammierbaren Baustein 30 durchgeführt, so wird die zusätzliche Sicherheitseinheit 31 erst nach einer Validierung des Datenbitstroms 16 aktiviert. Somit wird verhindert, dass bösartige Software aus der externen Datenquelle 20 integriert wird, die die Sicherheitseinheit 31, bspw. einen Sicherheitsanker, missbrauchen oder angreifen würde. Der Ablauf des Verfahrens bleibt wie für Baustein 10 beschrieben gültig.

Zur Überprüfung des Datenbitstroms 16 kann in der Prüfeinrichtung 13 beispielsweise als kryptographische Funktion eine kryptographische Hashfunktion, wie beispielsweise die HMAC-SHA256, verwendet werden. Als Validierungsparameter ist in diesem Fall ein geheimer Schlüssel auf dem Baustein bereitgestellt. Die kryptographische Funktion 19 ist hier beispielsweise ein HMAC-SHA256 Algorithmus, der mit Hilfe des geheimen Schlüssels und angewandt auf den Datenbitstrom 16 einen sogenannten verschlüsselten Message Authentication Code ermittelt. Der gleiche verschlüsselte Message Authentication Code wurde vorher mit demselben geheimen Schlüssel über die Daten den Datenbitstrom 16 berechnet und auf der externen Datenquelle 20 gespeichert. Der von der Prüfeinrichtung 13 berechnete Code wird nun mit dem vorher berechneten Code verglichen. Bei einem Übereinstimmen und somit einem positiven Prüfergebnis wird die Komponente 11 aktiviert und die Eingabeschnittstelle 14 zur Übertragung des Datenbitstroms 16 auf die Komponente 11 freigegeben. Der auf der externen Datenquelle 20 berechnete Nachrichten-Authentisierungscode kann auch mit dem Datenbitstrom 16 in die Prüfeinrichtung 13 geladen werden und dort mit dem Validierungsparameter 18 bzw. dem ermittelten Code geprüft werden. Dies hat den Vorteil, dass beliebige und insbesondere unterschiedliche Datenbitströme durch die Prüfeinrichtung geprüft werden können ohne den Baustein 10, 30 über den Ladebitstrom neu konfigurieren zu müssen. Andererseits muss der geheime Schlüssel über den Ladebitstrom auf den Baustein aufgebracht werden. Der Datenbitstrom wird somit durch ein symmetrisches kryptographisches Verfahren überprüft.

Als kryptographische Funktion 19 kann auch eine Signaturvalidierungsfunktion verwendet werden. Dabei ist als Validierungsparameter 18 der öffentliche Schlüssel eines asymmetrischen Kryptoverfahrens bzw. Schlüsselpaars gespeichert. Der Datenbitstrom 16 wird dabei signiert übertragen, umfasst also eine digitale Signatur, die mit dem geheimen Schlüssel des asymmetrischen Kryptoverfahrens über den Datenbitstrom 16 ermittelt wurde. Die Signaturvalidierungsfunktion in der Prüfeinrichtung 13 entschlüsselt mit dem öffentlichen Schlüssel die digitale Signatur aus dem Datenbitstrom 16 und vergleicht diese mit einem in der Prüfeinheit 13 über den Datenbitstrom gebildeten Hashwert. Stimmen die Werte überein, liegt ein positives Prüfergebnis vor und die Sicherheitseinheit 31 bzw. die Komponente 11 wird aktiviert. Ein solches asymmetrisches Verfahren hat gegenüber einem symmetrischen Verfahren den Vorteil, dass im Ladebitstrom kein geheimer Schlüssel gespeichert und geladen werden muss. Lediglich der öffentliche Schlüssel, der kein Geheimnis darstellt und öffentlich bekannt ist, wird mit dem Ladebitstrom 9 auf den Baustein 10, 30 implementiert.

Bei einem negativen Prüfergebnis kann auch lediglich eine Teilfunktion der Komponente 11 deaktiviert werden oder eine oder mehrere Komponenten mit falschen Daten aktiviert werden, so dass eine Benutzung dieser Komponenten unmöglich oder nur eingeschränkt möglich wird. Des Weiteren können nicht nur Daten, die auf einer Komponente 11 zur Ausführung gebracht werden sollen, überprüft werden, sondern Datenbitströme, die auf verschiedene unterschiedliche Komponenten geladen werden, geprüft werden.

Statt den Bootloader- oder Betriebssystem-Daten, die auf einem Speicher abgelegt sind, können auch Daten der Konfiguration anderer Bausteine z.B. eines Interface Chips für WLAN, Ethernet- oder auch Mobilfunkchips überprüft werden. Ebenfalls kann das Verfahren zur Prüfung einer Hardware-Konfiguration verwendet werden und das Vorhandensein von bestimmten Bausteinen oder Sprungmarkern, so genannten Jumpern, überprüft werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Speicherprogrammierbarer Baustein mit ladbaren Vertrauensanker umfassend eine Prüfeinrichtung (13) und mindestens eine weitere Komponente (11), wobei
die Prüfeinrichtung (13) durch einen Ladebitstrom (9) auf dem Baustein (10) erzeugbar ist und die mindestens eine Komponente (11) nach dem Laden automatisch deaktiviert ist, die Prüfeinrichtung (13) derart ausgebildet ist mindestens einen Datenbitstrom (16) zum Ausführen auf der mindestens einen Komponente (11) des Bausteins (10) von einer externen Datenquelle (20) einzulesen, den Datenbitstrom (16) zu prüfen und bei positivem Prüfergebnis ein Steuersignal (17) auszugeben, das die Komponente (11) aktiviert.

2. Speicherprogrammierbarer Baustein nach Anspruch 1, wobei die Prüfeinrichtung (13) eine kryptographische Funktion (19) umfasst und derart ausgebildet ist, die Daten des Datenstroms mit Hilfe eines Validierungsparameters (18) und der kryptographischen Funktion (19) zu prüfen.

3. Speicherprogrammierbarer Baustein nach Anspruch 2, wobei die kryptographische Funktion (19) eine Hashfunktion und der Validierungsparameter (18) ein mit der Hashfunktion erstellter Hashwert des Datenbitstroms (16) sind.

4. Speicherprogrammierbarer Baustein nach Anspruch 2, wobei die kryptographische Funktion (19) eine kryptographische Hashfunktion und der Validierungsparameter (18) ein geheimer Schlüssel sind.

5. Speicherprogrammierbarer Baustein nach Anspruch 2, wobei die kryptographische Funktion (19) eine Signaturvalidierungsfunktion ist und der Validierungsparameter (18) ein öffentlicher Schlüssel sind.

6. Speicherprogrammierbarer Baustein nach Anspruch 2, wobei ein Validierungsparameter mit dem Ladebitstrom (9) auf dem Baustein (10) implementierbar ist.

7. Speicherprogrammierbarer Baustein nach einem der Ansprüche 1 bis 6, umfassend einen zusätzlichen Sicherheitseinheit (31), die mit der zu programmierende Komponente und der Prüfungseinrichtung (13) verbunden ist und durch das Steuersignal (17) der Prüfeinrichtung (13) aktivierbar ist.

8. Speicherprogrammierbarer Baustein nach einem der Ansprüche 1 bis 7, wobei die Prüfeinrichtung (13) derart ausgebildet ist bei einem negativen Prüfergebnis ein Steuersignal (17) zum Deaktivieren der Komponente (11, 31) oder mindestens einer Teilfunktion der Komponente (11, 31) zu erzeugen oder die Komponente (11, 31) mit einem zweiten Datenbitstrom zu aktivieren, der eine Benutzung der Komponente (11, 31) unmöglich oder nur eingeschränkt möglich machen.

9. Speicherprogrammierbarer Baustein nach einem der Ansprüche 1 bis 8, umfassend einen steuerbaren Schalter (15) der durch das Steuersignal (17) der Prüfeinrichtung (13) die Komponente (11) oder den Vertrauensanker mit einem Taktgeber (12) verbindet und somit die Komponente oder den Vertrauensanker aktiviert oder trennt und somit deaktiviert.

10. Verfahren zur geschützten Übertragung von Daten von einer externen Datenquelle auf mindestens eine Komponente (11) eines Speicherprogrammierbarer Baustein mit den Schritten:
- Erzeugen (41) einer Prüfeinrichtung (13) auf dem Baustein (10) durch einen Ladebitstrom (9) und Deaktivieren der mindestens einen Komponente (11),
- Einlesen (42) mindestens eines Datenbitstrom (16) zum Ausführen auf der mindestens einen Komponente (11) des Bausteins (10) von einer externen Datenquelle (20) in die Prüfeinrichtung (13),
- Prüfen (43) des Datenbitstroms (16) in der Prüfeinrichtung; und
- Ausgabe (44) eines Steuersignals (17) bei positivem Prüfergebnis zum Aktivieren der Komponente (11) mit den Daten des Datenbitstroms (16).

11. Verfahren nach Anspruch 10, wobei die Daten des Datenstroms mit Hilfe einer kryptographischen Funktion und einem Validierungsparameter in der Prüfungseinheit (13) geprüft werden.

12. Verfahren nach Anspruch 11, wobei der Validierungswert (18) über den Ladebitstrom (9) auf dem Baustein implementiert wird.

13. Verfahren nach einem der Ansprüche 10 bis 12, wobei in der Prüfeinrichtung (13) aus den Daten des Datenbitstroms (16) mittels einer Hashfunktion als kryptographischen Funktion (19) ein Prüfwert erzeugt und gegenüber dem Validierungsparameter (18) geprüft wird.

14. Verfahren nach einem der Ansprüche 10 bis 12, wobei die kryptographische Funktion (19) eine kryptographische Hashfunktion und der Validierungsparameter (18) ein geheimer Schlüssel sind und im Datenbitstrom (16) ein mit demselben geheimen Schlüssel erzeugter Vergleichswert an die Prüfeinrichtung (13) übertragen wird.

15. Verfahren nach einem der Ansprüche 10 bis 12, wobei die kryptographische Funktion (19) eine Schlüsselvalidierungsfunktion und der Validierungsparameter (18) ein öffentlicher Schlüssel sind und der Datenbitstrom signiert mit einem dem öffentlichen Schlüssel entsprechenden geheimen Schlüssel an die Prüfeinrichtung (13) übertragen wird.

16. Verfahren nach einem der Ansprüche 10 oder 15, wobei der Datenbitstroms (16) Daten eines Startprogramms, ein Betriebssystems oder einer Baustein-Konfiguration enthält, und die externe Datenquelle eine Speichereinheit (20) außerhalb des Bausteins oder ein externes Speichermedium ist.

17. Computerprogrammprodukt umfassend Programmcodeteile, die dazu geeignet sind, die Schritte des Verfahrens nach einem der Ansprüche 10 bis 16 durchzuführen.

## Claims

1. Stored-program module with a loadable trust anchor, comprising a checking device (13) and at least one further component (11), wherein
the checking device (13) can be generated on the module (10) by means of a loading bit stream (9) and the at least one component (11) is automatically deactivated after loading, the checking device (13) is designed to read in at least one data bit stream (16) for execution on the at least one component (11) of the module (10) from an external data source (20), to check the data bit stream (16) and, in the event of a positive checking result, to output a control signal (17) which activates the component (11).

2. Stored-program module according to Claim 1, wherein the checking device (13) comprises a cryptographic function (19) and is designed to check the data in the data stream with the aid of a validation parameter (18) and the cryptographic function (19).

3. Stored-program module according to Claim 2, wherein the cryptographic function (19) is a hash function and the validation parameter (18) is a hash value of the data bit stream (16) created using the hash function.

4. Stored-program module according to Claim 2, wherein the cryptographic function (19) is a cryptographic hash function and the validation parameter (18) is a secret key.

5. Stored-program module according to Claim 2, wherein the cryptographic function (19) is a signature validation function and the validation parameter (18) is a public key.

6. Stored-program module according to Claim 2, wherein a validation parameter can be implemented on the module (10) using the loading bit stream (9).

7. Stored-program module according to one of Claims 1 to 6, comprising an additional security unit (31) which is connected to the component to be programmed and to the checking device (13) and can be activated by the control signal (17) from the checking device (13).

8. Stored-program module according to one of Claims 1 to 7, wherein the checking device (13) is designed, in the event of a negative checking result, to generate a control signal (17) for deactivating the component (11, 31) or at least one sub-function of the component (11, 31) or to activate the component (11, 31) with a second data bit stream which makes it impossible to use the component (11, 31) or makes it possible to use the component (11, 31) only to a limited extent.

9. Stored-program module according to one of Claims 1 to 8, comprising a controllable switch (15) which connects the component (11) or the trust anchor to a clock generator (12) by virtue of the control signal (17) from the checking device (13) and therefore activates or disconnects and therefore deactivates the component or the trust anchor.

10. Method for transmitting data from an external data source to at least one component (11) of a stored-program module in a protected manner, having the steps of:
- generating (41) a checking device (13) on the module (10) by means of a loading bit stream (9) and deactivating the at least one component (11),
- reading in (42) at least one data bit stream (16) for execution on the at least one component (11) of the module (10) from an external data source (20) into the checking device (13),
- checking (43) the data bit stream (16) in the checking device; and
- outputting (44) a control signal (17), in the event of a positive checking result, for the purpose of activating the component (11) with the data in the data bit stream (16) .

11. Method according to Claim 10, wherein the data in the data stream are checked in the checking unit (13) with the aid of a cryptographic function and a validation parameter.

12. Method according to Claim 11, wherein the validation value (18) is implemented on the module using the loading bit stream (9).

13. Method according to one of Claims 10 to 12, wherein a check value is generated from the data in the data bit stream (16) in the checking device (13) by means of a hash function as a cryptographic function (19) and is checked with respect to the validation parameter (18).

14. Method according to one of Claims 10 to 12, wherein the cryptographic function (19) is a cryptographic hash function and the validation parameter (18) is a secret key, and a comparison value generated using the same secret key is transmitted in the data bit stream (16) to the checking device (13) .

15. Method according to one of Claims 10 to 12, wherein the cryptographic function (19) is a key validation function and the validation parameter (18) is a public key, and the data bit stream is transmitted to the checking device (13) in a manner signed with a secret key corresponding to the public key.

16. Method according to either of Claims 10 and 15, wherein the data bit stream (16) contains data from a starting program, an operating system or a module configuration, and the external data source is a storage unit (20) outside the module or an external storage medium.

17. Computer program product comprising program code parts which are suitable for carrying out the steps of the method according to one of Claims 10 to 16.

## Revendications

1. Module à commande par programme enregistré avec certificats approuvés chargeables, comprenant un dispositif de contrôle (13) et au moins un autre composant (11), le dispositif de contrôle (13) pouvant être généré par un flux de bits de charge (9) sur le module (10) et l'au moins un composant (11) étant désactivé automatiquement après le chargement, le dispositif de contrôle (13) étant conçu de manière à lire au moins un flux de bits de données (16) d'une source de données externe (20) pour exécution sur l'au moins un composant (11) du module (10), à contrôler le flux de bits de données (16) et à émettre, en cas de résultat de contrôle positif, un signal de commande (17) qui active le composant (11) .

2. Module à commande par programme enregistré selon la revendication 1, le dispositif de contrôle (13) incluant une fonction cryptographique (19) et étant conçu de manière à contrôler les données du flux de données à l'aide d'un paramètre de validation (18) et de la fonction cryptographique (19).

3. Module à commande par programme enregistré selon la revendication 2, la fonction cryptographique (19) étant une fonction de hachage et le paramètre de validation (18) étant une valeur de hachage du flux de bits de données (16) créée avec la fonction de hachage.

4. Module à commande par programme enregistré selon la revendication 2, la fonction cryptographique (19) étant une fonction de hachage cryptographique et le paramètre de validation (18) étant une clé secrète.

5. Module à commande par programme enregistré selon la revendication 2, la fonction cryptographique (19) étant une fonction de validation de signature et le paramètre de validation (18) étant une clé publique.

6. Module à commande par programme enregistré selon la revendication 2, un paramètre de validation pouvant être implémenté avec le flux de bits de charge (9) sur le module (10) .

7. Module à commande par programme enregistré selon l'une des revendications 1 à 6, comprenant une unité de sécurité supplémentaire (31) qui est reliée au composant à programmer et au dispositif de contrôle (13) et qui peut être activée par le signal de commande (17) du dispositif de contrôle (13) .

8. Module à commande par programme enregistré selon l'une des revendications 1 à 7, le dispositif de contrôle (13) étant conçu de manière à générer, en cas de résultat de contrôle négatif, un signal de commande (17) pour désactiver le composant (11, 31) ou au moins une fonction partielle du composant (11, 31) ou à activer le composant (11, 31) avec un deuxième flux de bits de données rendant une utilisation du composant (11, 31) impossible ou possible de manière seulement limitée.

9. Module à commande par programme enregistré selon l'une des revendications 1 à 8, comprenant un commutateur commandable (15) qui relie le composant (11) ou le certificat approuvé à une horloge (12) par le signal de commande (17) du dispositif de contrôle (13) et active ainsi ou sépare et donc désactive le composant ou le certificat approuvé.

10. Procédé de transmission protégée de données d'une source de
données externe à au moins un composant (11) d'un module à commande par programme enregistré, comprenant les étapes suivantes :
génération (41) d'un dispositif de contrôle (13) sur le module (10) par un flux de bits de charge (9) et
désactivation de l'au moins un composant (11),
lecture (42) d'au moins un flux de bits de données (16) pour exécution sur l'au moins un composant (11) du module (10),
d'une source de données externe (20) vers le dispositif de contrôle (13),
contrôle (43) du flux de bits de données (16) dans le dispositif de contrôle et
émission (44) d'un signal de commande (17) en cas de résultat de contrôle positif pour l'activation du composant (11) avec les données du flux de bits de données (16).

11. Procédé selon la revendication 10, les données du flux de données étant contrôlées à l'aide d'une fonction cryptographique et d'un paramètre de validation dans l'unité de contrôle (13).

12. Procédé selon la revendication 11, la valeur de validation (18) étant implémentée sur le module via le flux de bits de charge (9).

13. Procédé selon l'une des revendications 10 à 12, une valeur
de contrôle étant générée en tant que fonction cryptographique (19) dans le dispositif de contrôle (13) à partir des données du flux de bits de données (16) au moyen d'une fonction de hachage et étant contrôlée par rapport au paramètre de validation (18).

14. Procédé selon l'une des revendications 10 à 12, la fonction cryptographique (19) étant une fonction de hachage cryptographique et le paramètre de validation (18) étant une clé secrète, et une valeur de comparaison générée avec la même clé secrète étant transmise au dispositif de contrôle (13) dans le flux de bits de données (16).

15. Procédé selon l'une des revendications 10 à 12, la fonction cryptographique (19) étant une fonction de validation de clé et le paramètre de validation (18) étant une clé publique, et le flux de bits de données étant transmis au dispositif de contrôle (13) signé avec une clé secrète qui correspond à la clé publique.

16. Procédé selon l'une des revendications 10 ou 15, le flux de bits de données (16) contenant des données d'un programme de lancement, d'un système d'exploitation ou d'une configuration de module, et la source de données externe étant une unité de mémoire (20) en dehors du module ou un support de mémoire externe.

17. Produit de programme informatique comprenant des parties de code de programme qui sont adaptées pour exécuter les étapes du procédé selon l'une des revendications 10 à 16.
